# EUROPEAN PATENT APPLICATION

(11) **EP 1 282 294 A2**
(43) Date of publication of application: **05.02.2003**
(21) Application number: 02012579.5
(22) Date of filing: 06.06.2002
(51) Int. Cl.: H04M 3/42

(54) **Personalized telecommunication services provisioning system and method**

(30) Priority: 30.07.2001 US 918089
(71) Applicant: ALCATEL, 75008 Paris (FR)
(72) Inventor: Mani, Babu V., Plano, TX 75025 (US); Cornes, Martin P.J., Plano, TX 75023 (US)
(74) Representative: Dreiss, Fuhlendorf, Steimle & Becker

(57) **Abstract**

A provisioning system, apparatus and method are described that provides a personal profile form to a person and allows that person to interact with the personal profile form to subscribe and unsubscribe to telecommunications services and/or modify service attributes of one or more calling features in his/her telecommunications service profile. Basically, the provisioning system generates a personal profile form and allows a person to interact with the personal profile form so that they can add, disable or update a calling feature in their telecommunication service profile. The provisioning system then uses an expert program to analyze the personal profile form in order to determine whether the person changed anything on the personal profile form. If the person requested that a change be made to their telecommunication service profile, then the provisioning system implements that change and updates their telecommunication service profile.

## Description

### BACKGROUND OF THE INVENTION

### Field of the Invention

The present invention relates in general to the telecommunications field and, in particular, to a provisioning system, apparatus and method that provides a personal profile form to a person and allows the person to interact with the personal profile form so that they can subscribe and unsubscribe to telecommunications services and/or modify service attributes of one or more calling features in their telecommunications service profile.

### Description of Related Art

Today in the telecommunications field, it is difficult for a subscriber to add, disable or update a calling feature (e.g., call forwarding, speed calling, call blocking...) in their telecommunication service profile. In the past, and even today, the subscriber would have to talk to an operator in order to change a calling feature in their telecommunication service profile. Typically, the subscriber had to dial a service number and wait a while before the call was answered by an operator. Then, the operator would ask one or more questions to verify the identity of the subscriber and after that the subscriber would have the difficult task of communicating the actual service request to the operator. The subscriber often has a difficult task of communicating the service request to the operator because the operator may not know all of the details about the different calling features and/or the operator and subscriber may not be able to effectively communicate with one another due to language barriers.

Therefore, it would be desirable to let the subscriber make their own changes to his/her telecommunications service profile instead of making the subscriber communicate with an operator to make changes to their telecommunication service profile. To date, the only way a subscriber can make their own changes to their telecommunication service profile is to have the subscriber interact with the buttons on their phone or interact with a traditional complicated web based provisioning system. In particular, the subscriber needs to press a series of keys on their phone to make minor changes to the calling features in his/her telecommunications service profile such as change their speed calling list, change the phone number where their incoming calls are to be forwarded or simply activate or deactivate a calling feature. This can be very time consuming and many subscribers will not take the time to press the keys on their phone to change the calling features in their telecommunications service profile. On the other hand, the subscriber can interact with a service subscription form generated by the traditional complicated web based provisioning system to change calling features in his/her telecommunications service profile. However, a main drawback of the traditional web based provisioning system is that the service subscription form shows all the data fields for all of the calling features that are offered by the network operator. In particular, a subscriber has to be authorized to access a web server in order to interact with the service subscription form which is not personalized and then they have to stay on-line until the transaction is complete. Since, the service subscription form is not personalized the subscriber has the difficult and time consuming tasks of navigating through a large number of data fields in the service subscription form just to change a calling feature in their telecommunication service profile. Accordingly, there is a need for a provisioning system that generates a user-friendly and personalized profile form for each subscriber which they can use to modify service attributes of one or more calling features in their telecommunications service profile. This need and other needs are addressed by the provisioning system, the apparatus and the method of the present invention.

### BRIEF DESCRIPTION OF THE INVENTION

The present invention includes a provisioning system, apparatus and method that provides a personal profile form to a person and allows that person to interact with the personal profile form to subscribe and unsubscribe to telecommunications services and/or modify service attributes of one or more calling features in their telecommunications service profile. Basically, the provisioning system generates a personal profile form and allows a person to interact with the personal profile form so that they can add, disable or update a calling feature in their telecommunications service profile. The provisioning system then uses an expert program to analyze the personal profile form in order to determine whether the person changed anything on the personal profile form. If the person requested that a change be made to their telecommunication service profile, then the provisioning system implements that change and updates his/her telecommunication service profile.

### BRIEF DESCRIPTION OF THE DRAWINGS

A more complete understanding of the present invention may be had by reference to the following detailed description when taken in conjunction with the accompanying drawings wherein:
FIGURE 1 is a block diagram illustrating the basic components of a system in accordance with the present invention;
FIGURE 2 is a diagram of the system shown in FIGURE 1 which is used to help describe some of the capabilities of the present invention;
FIGURES 3A and 3B are block diagrams illustrating an exemplary blank personal profile form and an exemplary completed personal profile form either of which can be stored in an apparatus shown in FIGURE 2;
FIGURE 4 is another diagram of the system shown in FIGURE 1 which is used to help describe some more capabilities of the present invention;
FIGURES 5A and 5B are block diagrams illustrating an exemplary blank personal profile form and an exemplary completed personal profile form either of which can be stored in a provisioning system shown in FIGURE 4;
FIGURE 6 is yet another diagram of the system shown in FIGURE 1 which is used to help describe even more capabilities of the present invention; and
FIGURE 7 is a flowchart illustrating the basic steps of a preferred method in accordance with the present invention.

### DETAILED DESCRIPTION OF THE DRAWINGS

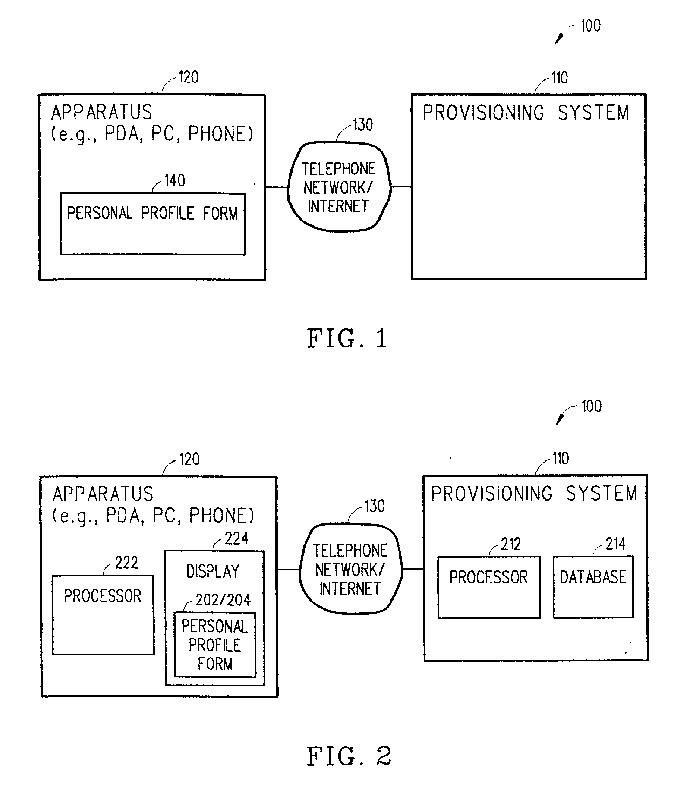

Referring to FIGURES 1-7, there is disclosed a preferred embodiment of the present invention where a system 100 and a preferred method 700 are described that provides a personal profile form to a person and allows that person to interact with the personal profile form to create a telecommunications service profile or to make changes to their telecommunication service profile. Although only one person is described using the present invention, it should be understood that any number of people could use the present invention to create a telecommunications service profile or to make changes to their telecommunications service profile. Accordingly, the system 100 and preferred method 700 should not be construed in a limited manner.

Referring to FIGURE 1, there is a block diagram illustrating the basic components of a system 100 which includes a provisioning system 110 and an apparatus 120 (e.g., personal digital assistant (PDA), personal computer, intelligent phone). The apparatus 120 is used by a person that subscribes to or wants to subscribe to one or more calling features (e.g., call forwarding, speed calling, call blocking...) offered by a network operator. The network operator is typically the one that maintains the provisioning system 110. The provisioning system 110 and apparatus 120 can communicate with one another through a telecommunications network or the Internet 130.

Assuming the person already subscribes to one or more calling features offered by the network operator, the provisioning system 110 is capable of generating a user-friendly profile form 140 which is created especially for that subscriber and personalized to indicate the calling features that make up their telecommunication service profile. The subscriber can interact with the personal profile form 140 to change their telecommunication service profile. In particular, the subscriber can interact with the personal profile form 140 to add, disable or update one or more calling features to, from or in their telecommunication service profile.

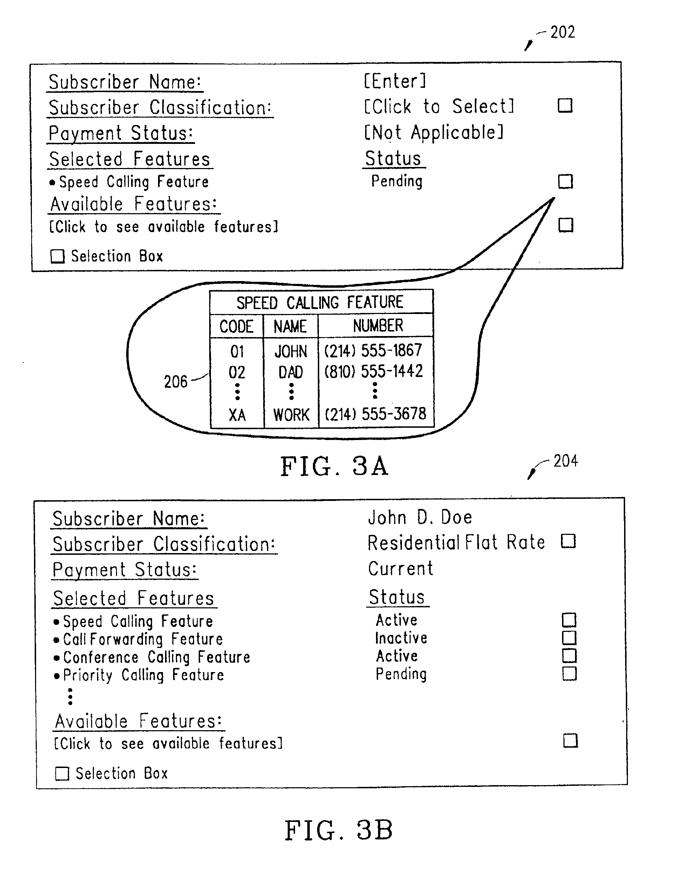

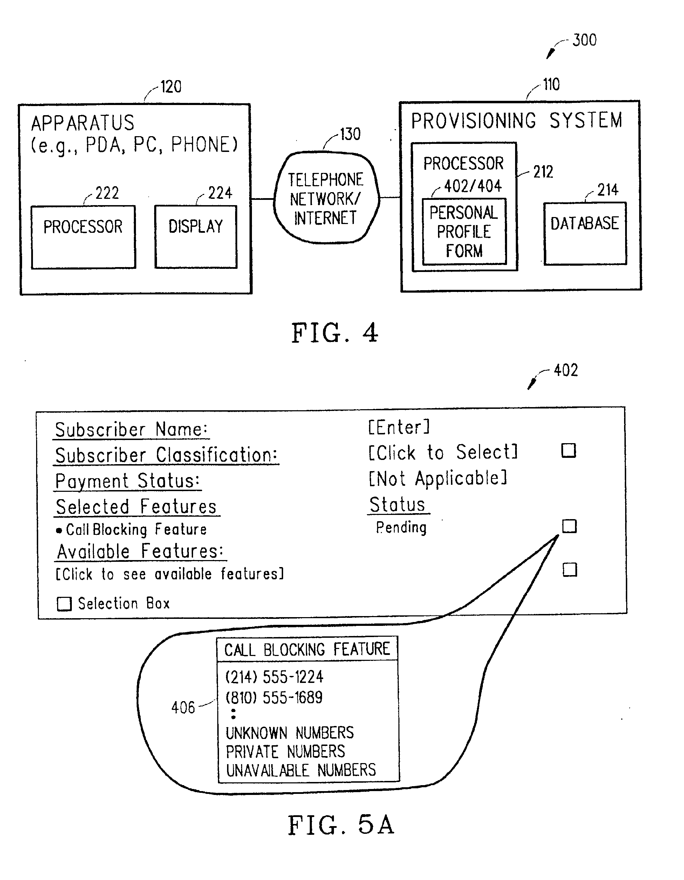

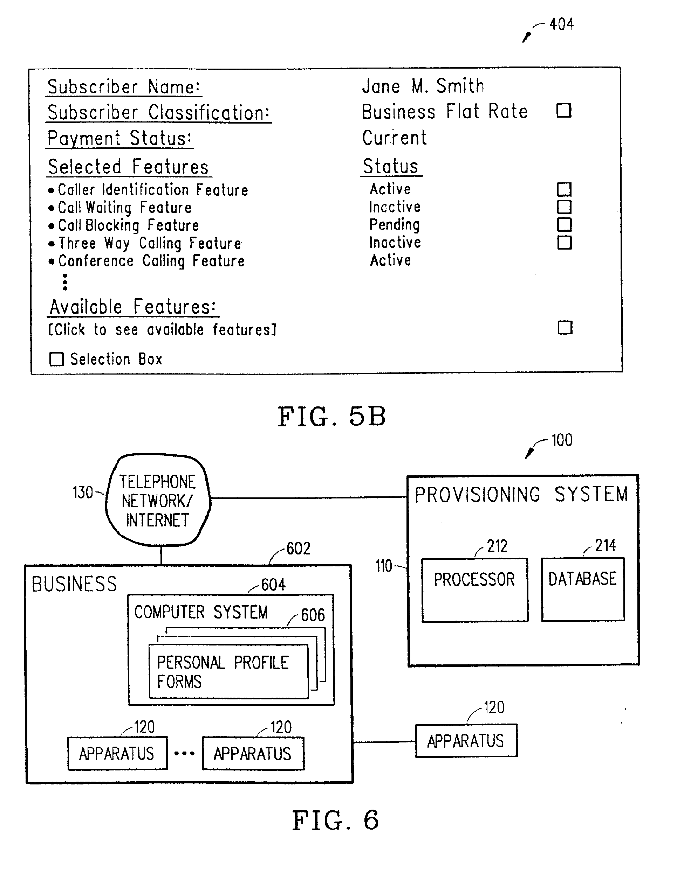

The personal profile form 140 is created such that all of the unnecessary data fields or non-used calling features are hidden from the subscriber (e.g., see FIGURES 3 and 5). In addition, the personal profile form 140 can be downloaded from the provisioning system 110 and stored within the apparatus 120 (see FIGURES 1, 2 and 6). Or, the personal profile form 140 can be maintained and stored at the provisioning system 110 and accessed by the subscriber with the help of apparatus 120 (see FIGURE 4). As such, each subscriber can select whether they want to store their personal profile form 140 at their apparatus 120 or at the provisioning system 110.

On a periodic basis or when requested, the provisioning system 110 uses an expert program to analyze the personal profile form 140 and to determine if any calling features were changed by the subscriber. If the subscriber requested that a change be made to anyone of their calling features, then the provisioning system 110 would make those changes to the subscriber's telecommunications service profile. Several different examples of the capabilities of the system 100, the provisioning system 110 and the apparatus 120 are described below with respect to FIGURES 2-6.

Referring to FIGURE 2, there is a diagram of the system 100 which is used to help describe some of the capabilities of the present invention. In the beginning, a new subscriber (e.g., John D. Doe) is initially presented with a blank personal profile form 202 on which the new subscriber can enter their name and select one or more calling features they want included in their telecommunication service profile (see FIGURE 3A). In this example, the personal profile form 202 is downloaded by a processor 222 and shown in a display 224 of the apparatus 120. The subscriber can interact with the personal profile form 202 to select and configure one or more calling features such as:
- Call waiting
- Anonymous call rejection
- Call blocking
- Call forwarding
- Voice mail service
- Caller identification
- Call waiting
- Call trace
- Personalized ring
- Speed calling
- Priority calling
- Three-way calling
- Conference calling
- Etc...

The subscriber can take as much time as they want to fill-out the blank personal profile form 202 and select the calling feature or calling features they want to have in their telecommunication service profile. The subscriber can interact with the personal profile form 202 in anyone of a variety of ways including, for example, pushing keys on the apparatus 120, using a mouse or using a stylus. If needed, the subscriber can interact with a separate page on the personal profile form 202 to add the necessary information needed to activate one of the calling features. For instance, the subscriber may interact with a page 206 behind the personal profile form 202 to add the names, speed dialing codes and phone numbers of people or places they want to have added to their speed calling feature. Again, the personal profile form 202 is created such that all of the unnecessary data fields or non-used calling features are hidden from the subscriber. In addition, the personal profile form 202 can be in many different languages.

After filling out the blank personal profile form 202, the subscriber can then forward the completed personal profile form 204 to the provisioning system 110 (see FIGURE 3B). Alternatively, the provisioning system 110 on a periodic basis can query the apparatus 120 to obtain the completed personal profile form 204. As shown in FIGURE 3B, the completed personal profile form 204 can include fields such as:
- Subscriber name
- Subscriber classification (e.g., residential, business)
- Payment status
- Selected calling features
- Available calling features
- Subscriber since
- Date of subscription
- Status of request to change a calling feature
- Etc...

Next, the provisioning system 110 and, in particular, a processor 212 can use an expert program to analyze the completed personal profile form 204 to determine what calling features the subscriber wants as part of their telecommunication service. The processor 212 then issues the appropriate commands to a database 214 which updates the various service tables therein so as to enable the selected calling features. At this time, the provisioning system 110 can notify the subscriber that he can now utilize the telecommunication services of the network.

At any time after activation of their telecommunication service, the subscriber can access and interact with the personal profile form 204 to make changes to their telecommunication service profile. In particular, the subscriber can interact with the personal profile form 204 to add, disable or update one or more calling features to, from or in their telecommunication service profile. For instance, the subscriber may want to update the call-forwarding feature to change the destination number where incoming calls are to be forwarded to the subscriber. If the subscriber wants the change to the call-forwarding feature to be immediately implemented (on a priority basis) the subscriber can send a special request along with the changed personal profile form 204 to the provisioning system 110. Otherwise, the provisioning system 110 will make the necessary changes to the service tables in the database 214 to implement the change in the call forwarding feature at a time when the update will have little impact on the performance of the network (e.g., make the change during off peak hours). Thereafter, the provisioning system 110 can notify the subscriber that the change or changes to his/her telecommunications service profile have or have not been made. If the requested change to the telecommunications service profile has not been made, then the provisioning system 110 can provide details to the subscriber as to why the requested change was not implemented by the network.

It should be understood that the subscriber need not fill-out a blank personal profile form 202 in order to obtain a completed personal profile form 204 from the network. Because, the network operator can generate and submit a completed personal profile form to an existing subscriber who can then use the completed personal profile form to make changes to their telecommunication service profile without ever having to fill-out a blank personal profile form 202.

It should also be understood that the apparatus 120 used by the subscriber to interact with the personal profile form 204 may or may not be the phone used by the subscriber to make and receive phone calls. Moreover, it should be understood that the personal profile form 204 can be customized by the provisioning system 110 to suit the particular capabilities of the apparatus 120 currently being used by the subscriber. For example, the personal profile form 204 can have a menu format if an apparatus 120 does not have the necessary graphics capabilities to display the entire personal profile form 204. Again, the apparatus 120 can include electronic devices such as:
- Personal Digital Assistant
- Personal Computer
- Corporate Computer System
- Intelligent Phones (e.g., web based phones)
- Etc..

Referring to FIGURE 4, there is a diagram of the system 100 which is used to help describe some more capabilities of the present invention. In the beginning, a new subscriber (e.g., Jane M. Smith) is initially presented with a blank personal profile form 402 on which the new subscriber can enter their name and select one or more calling features they want included in their telecommunication service profile (see FIGURE 5A). In this example, the personal profile form 402 is maintained and stored at the provisioning system 110 and can be accessed from anywhere by the subscriber using an apparatus 120 (e.g., personal digital assistant (PDA), personal computer, intelligent phone). The subscriber using an apparatus 120 (e.g., personal computer) can interact with the personal profile form 402 (e.g., web page) to select and configure calling features such as:
- Call waiting
- Anonymous call rejection
- Call blocking
- Call forwarding
- Voice mail service
- Caller identification
- Call waiting
- Call trace
- Personalized ring
- Speed calling
- Priority calling
- Three-way calling
- Conference calling
- Etc...

The subscriber can take as much time as they want to fill-out the blank personal profile form 402 and select the calling feature or calling features they want to have in their telecommunication service profile. The subscriber can interact with the personal profile form 402 in anyone of a variety of ways including, for example, pushing keys on the apparatus 120, using a mouse or using a stylus. If needed, the subscriber can interact with a separate page on the personal profile form 402 to add the necessary information needed to activate one of the calling features. For instance, the subscriber may interact with a page 406 associated with the call blocking feature to add the phone numbers of people they do not want to receive calls from. Again, the personal profile form 402 is created such that all of the unnecessary data fields or non-used calling features are hidden from the subscriber. In addition, the personal profile form 402 can be in many different languages.

As shown in FIGURE 5B, the completed personal profile form 404 can include fields such as:
- Subscriber name
- Subscriber classification (e.g., residential, business)
- Payment status
- Selected calling features
- Available calling features
- Subscriber since
- Date of subscription
- Status of request to change a calling feature
- Etc...

The provisioning system 110 and, in particular, the processor 212 can use an expert program to analyze on a real time basis or on a periodic basis the completed personal profile form 404 to determine what calling features the subscriber wants as part of their telecommunication service. The processor 212 then issues the appropriate commands to the database 214 which updates the various service tables therein so as to enable the selected calling features. At this time, the provisioning system 110 can notify the subscriber that they can now utilize the telecommunication services of the network.

At any time after activation of their telecommunication service, the subscriber can access and interact with the personal profile form 404 to make changes to their telecommunication service profile. In particular, the subscriber can interact with the personal profile form 404 to add, disable or update one or more calling features to, from or in his/her telecommunication service profile. For instance, the subscriber may want to disable their conference-calling feature to save money until they need to setup a conference call at which time the subscriber can reactivate the conference-calling feature. If the subscriber wants the change to the conference-calling feature to be immediately implemented (on a priority basis) the subscriber can provide a special request to the provisioning system 110. Otherwise, the provisioning system 110 will make the necessary changes to the service tables in the database 214 to disable the conference calling feature at a time when the change will have little impact on the performance of the network (e.g., make the change during off peak hours). Thereafter, the provisioning system 110 can notify the subscriber that the change or changes to their telecommunication service profile have or have not been made. If the requested change to the telecommunications service profile has not been made, then the provisioning system 110 can provide details to the subscriber as to why the requested change was not implemented by the network. This ability to disable a calling feature whenever the subscriber wants can benefit the subscriber since they can save money by paying only for what they use.

It should be understood that the subscriber need not fill-out a blank personal profile form 402 in order to obtain a completed personal profile form 404 from the network operator. Because, the network operator can generate and submit a completed personal profile form to an existing subscriber who can then use the completed personal profile form to make changes to their telecommunication service profile without ever having to fill-out a blank personal profile form 402.

Referring to FIGURE 6, there is a diagram of the system 100 which is used to help describe even more capabilities of the present invention. In this example, a business 602 can store at their computer system 604 the personal profile forms 606 of their employees. The business 602 and each employee or class of employees can be considered a subscriber to the telecommunications service of the network. As such, the provisioning system 110 can create a user-friendly profile form 606 for each employee that has been personalized to indicate each employee's telecommunications service profile. Each employee can access their personal profile form 606 with the help of an apparatus 120 (only three shown) that can be located at the business 602 or located outside of the business 602.

An employee can use an apparatus 120 (e.g., PDA, personal computer, intelligent phone) to create or interact with a personal profile form 606. In particular, each employee can interact with their personal profile form 606 to add, disable or update one or more calling features to, from or in his/her telecommunications service profile. Again, the personal profile forms 606 are created such that all of the unnecessary data fields or non-used calling features are hidden from the employees (e.g., see FIGURES 3 and 5). Below is a list of calling features that can be selected by an employee:
- Call waiting
- Anonymous call rejection
- Call blocking
- Call forwarding
- Voice mail service
- Caller identification
- Call waiting
- Call trace
- Personalized ring
- Speed calling
- Priority calling
- Three-way calling
- Conference calling
- Etc...

The business 602 can compile all of the personal profile forms 606 that have been created and revised and forward these personal profile forms 606 to the provisioning system 110. In fact, the business 602 can send all of this data to the provisioning system 110 during off-peak hours to save network resources. Alternatively, the provisioning system 110 on a periodic basis can query the business 602 to obtain the personal profile forms 606 that have been created or revised by employees. Moreover, it should be understood that as far as submitting changes to the provisioning system 110, it can be automatic (program triggered) or manual (explicit command given by one of the users). These abilities to add, disable and modify a calling feature whenever an employee wants benefits the business since the business does not need support staff to gather these requests and can have the employees set up their own services. The provisioning system 110 then uses an expert program to issue the appropriate commands to a database 214 which updates the various service tables therein so as to activate or deactivate the calling features of the different employees. At this time, the provisioning system 110 can notify the business 602 as to which employees can now utilize or not utilize the requested telecommunication services of the network.

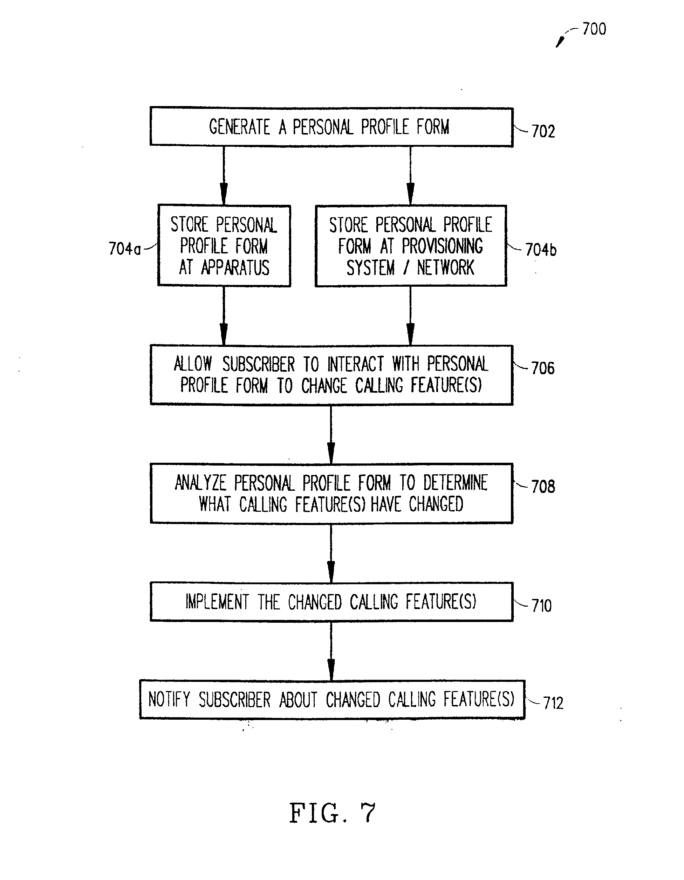

Referring to FIGURE 7, there is a flowchart illustrating the basic steps of the preferred method 700. Assuming that a person already subscribes to a telecommunications service of the network, the provisioning system 110 generates (step 702) a user-friendly profile form 140 which is created especially for the subscriber and personalized to indicate the calling features that make-up their telecommunication service profile (see the completed personal profile forms 202 and 404 of FIGURES 3B and 5B). Again, the personal profile form 140 is created such that all of the unnecessary data fields or non-used calling features are hidden from the subscriber. In addition, the personal profile form 140 can be in many different languages.

The subscriber can download the personal profile form 140 from the provisioning system 110 and store (step 704a) the downloaded personal profile form 140 within the apparatus 120 (e.g., personal computer, personal digital assistant (PDA), intelligent phone). Or, the personal profile form 140 may be maintained and stored (step 704b) at the provisioning system 110 and accessed by the subscriber with the help of an apparatus 120.

Regardless of whether the personal profile form 140 is stored at the apparatus 120 or the provisioning system 110, the subscriber is allowed (step 706) to interact with the personal profile form 140 to change their telecommunication service profile. In particular, the subscriber can interact with the personal profile form 140 to add, disable or update one or more calling features to, from or in his/her telecommunications service profile. Below is a list of some of the calling features that the subscriber can change in their telecommunication service profile:
- Call waiting
- Anonymous call rejection
- Call blocking
- Call forwarding
- Voice mail service
- Caller identification
- Call waiting
- Call trace
- Personalized ring
- Speed calling
- Priority calling
- Three-way calling
- Conference calling
- Etc...

The subscriber can take as much time as they want to interact with the personal profile form 140 to subscribe to and/or modify service attributes of one or more calling features in their telecommunication service profile. For instance, the subscriber can interact with the personal profile form 140 to add a voice mail calling feature and disable a caller identification feature in their telecommunication service profile. As described earlier, the completed personal profile form 140 can include fields such as (see also FIGURES 3B and 5B):
- Subscriber name
- Subscriber classification (e.g., residential, business)
- Payment status
- Selected calling features
- Available calling features
- Subscriber since
- Date of subscription
- Status of request to change a calling feature
- Etc...

The subscriber can then forward the personal profile form 140 to the provisioning system 110. Or, the provisioning system 110 can query the apparatus 120 on a periodic basis to obtain the personal profile form 140. The provisioning system 110 uses an expert program to analyze (step 708) the personal profile form 140 and to determine whether any of the calling features were changed by the subscriber.

If the subscriber requested that a change be made in his/her telecommunications service profile, then the provisioning system 110 implements (step 710) those changes made to the calling feature(s). In particular, the provisioning system 110 issues a series of commands to the database 214 in order to update the various service tables and to make those changes to the calling feature(s). At this time, the provisioning system 110 notifies (step 712) the subscriber that their changes were or were not accepted by the network operator.

It should be noted that a new subscriber can be issued a blank personal profile form so they can establish an account with the network operator. After filling out the blank personal profile form, the subscriber can then subscribe to and/or modify service attributes of one or more calling features of their telecommunication service as described above with respect to steps 702 through step 712.

The present invention offers many different advantages to both network operators and subscribers. For instance, the present invention enables the network operator to provide telecommunications services to subscribers without having to hire and train a large number of operators. The network operators can also increase their revenue by offering user sensitive billing to their subscribers. For instance, the network operator could charge a premium fee for providing on-demand telecommunications services to a subscriber in that they pay only when they use a particular telecommunication service. Of course, the subscriber may pay a monthly service fee to have some calling features always activated instead of paying premium fees associated with user sensitive billing.

On the other hand, the present invention offers many different advantages to the subscribers. For example, the subscribers no longer need to try and reach an operator and then communicate with that operator to make changes to their telecommunications service. Some other advantages and capabilities of the present invention are briefly described below:
- The personal profile form is simple and easy to use because it is similar to a paper form and can hide unrelated information from the subscriber. The subscriber does not have to know how data is stored (which tables and required data fields, etc.) in the networks database.
- Hidden behind the personal profile form can be a number of checks the network operator can perform at the apparatus or provisioning system. For instance, personal profile form can be setup to identify a conflict between subscribed service calling features, pre-requisites, etc... Moreover, a client program can perform local checking and also generate specific updates or change requests and forward them to the provisioning system.
- The subscriber can verify his/her subscriptions from this personal profile form without burdening the networks database. As described above, the personal profile form can be stored locally at an apparatus (personal PC or workstation) used by the subscriber. Or, the personal profile form can also be kept on the web which can make it easy for the subscriber to access his/her profile from anywhere.
- The provisioning system can generate personal profile forms from templates and records maintained at the subscriber database. In addition, the provisioning system can make sure that the personal profile form is accessible from anywhere and can also ensure that data is not lost in case the local copy of the personal profile form is damaged.
- Call processing and other network operations can access subscriber data from the subscriber database.
- The subscriber can take as much time as necessary to make the appropriate changes and click ok when he/she is satisfied with the changes they have made to the personal profile form. Once the page is presented all subsequent processing (e.g., conflict checks) can be done locally until it is ready for network update. This is not possible with traditional web based provisioning systems.
- If a change in a subscriber's telecommunication service needs to be made immediately (e.g., on a priority basis), the subscriber can send a special request to the provisioning system. Otherwise, in most cases, the provisioning system can make the necessary database changes on a scheduled basis without impacting the network performance and wasting the subscriber's valued time.
- The network operator can use the provisioning system to fully automate provisioning for their subscribers.
- A program stored locally at the apparatus can send appropriate database change requests to the provisioning system. The subscriber does not have to be aware of this activity. When network database updates are done (or rejected), the provisioning system can send confirmation messages back to the subscriber.
- The personal profile form can be recreated by the network (or more specifically, by an expert system at the network) if the subscriber desires to access the form from a remote terminal.
- Live interaction with the provisioning system can be limited to the initial creation of the personal profile form and when the subscriber desires to access the personal profile form from the network from a remote location.
- Client programs residing behind these personal profile forms can analyze the entries (or form) and generate modification requests to the provisioning system when necessary.
- These personal profile forms may also include personal notes, which are ignored by the provisioning system.
- When accessing the network (or when there is communication between the client programs behind the personal profile form and the provisioning system at the network), the provisioning system can update the local personal profile form with newer versions of the client programs or feature information, i.e., new features, new feature options, etc.
- A person can select a particular title or a particular box on the personal profile form to make a change to a specific network provided service.
- The personal profile form can have many different layers. For instance, the top layer may list just the subscribed features and the next layer may show options for selected features and so on.

Although several embodiments of the present invention has been illustrated in the accompanying Drawings and described in the foregoing Detailed Description, it should be understood that the invention is not limited to the embodiments disclosed, but is capable of numerous rearrangements, modifications and substitutions without departing from the spirit of the invention as set forth and defined by the following claims.

## Claims

1. A method for enabling a subscriber to maintain their telecommunication service profile, said method comprising the steps of:
generating a personal profile form;
allowing the subscriber to interact with the personal profile form to change at least one calling feature of the telecommunications service profile;
analyzing the personal profile form to determine what calling feature, if any, was changed in the telecommunications service profile; and
implementing the changed at least one calling feature of the telecommunications service profile.

2. The method of Claim 1, further comprising the step of allowing the subscriber to interact with the personal profile form to select at least one calling feature to create the telecommunications service profile.

3. The method of Claim 1, further comprising the step of storing the personal profile form at an apparatus used by the subscriber.

4. The method of Claim 1, further comprising the step of storing the personal profile from at a provisioning system.

5. The method of Claim 1, further comprising the step of informing the subscriber about the changed at least one calling feature of the telecommunications service profile.

6. The method of Claim 1, wherein said step of analyzing the personal profile form further includes periodically accessing the personal profile form to determine whether the subscriber changed at least one calling feature of the telecommunications service profile.

7. The method of Claim 1, wherein said step of analyzing the personal profile form further includes immediately accessing the personal profile form whenever the subscriber changed at least one calling feature of the telecommunications service profile.

8. The method of Claim 1, wherein said step of implementing the changed at least one calling feature of the telecommunications service profile further includes the step of updating at least one service table in a database of a provisioning system.

9. The method of Claim 1, wherein said personal profile form is a web page.

10. The method of Claim 1, wherein said at least one calling feature can be any network provided service.

11. A provisioning system comprising:
a processor capable of analyzing a personal profile form that was created for and used by a person to change at least one calling feature of a telecommunications service profile, said processor is further capable of implementing the changed at least one calling feature of the telecommunications service profile.

12. The provisioning system of Claim 11, further comprising a database including at least one service table that is updated with new information whenever said processor implements the changed at least one calling feature of the personal telecommunications service profile.

13. The provisioning system of Claim 11, wherein said processor communicates through an Internet with an apparatus used by the person to interact with the personal profile form.

14. The provisioning system of Claim 11, wherein said processor communicates through a telecommunications network with an apparatus used by the person to interact with the personal profile form.

15. The provisioning system of Claim 11, wherein said processor is further capable of immediately accessing the personal profile form whenever the person changed at least one calling feature of the telecommunications service profile.

16. The provisioning system of Claim 11, wherein said processor is capable of periodically accessing the personal profile form to determine whether the person changed at least one calling feature of the telecommunications service profile.

17. The provisioning system of Claim 11, wherein said personal profile form is stored at an apparatus.

18. The provisioning system of Claim 11, wherein said personal profile form is stored at the provisioning system.

19. The provisioning system of Claim 11, wherein said personal profile form can enable the subscriber to add at least one calling feature to the telecommunications service profile.

20. The provisioning system of Claim 11, wherein said personal profile form can enable the subscriber to disable at least one calling feature in the telecommunications service profile.

21. The provisioning system of Claim 11, wherein said personal profile form can enable the subscriber to update at least one calling feature in the telecommunications service profile.

22. The provisioning system of Claim 11, wherein said personal profile form can enable the subscriber to instruct said processor to immediately change at least one calling feature of the telecommunications service profile.

23. The provisioning system of Claim 11, wherein said at least one calling feature can be any network provided service.

24. An apparatus comprising:
a processor capable of accessing a personal profile form; and
a display, coupled to said processor, for displaying the personal profile form so that a subscriber could interact with the personal profile form to change at least one calling feature of a telecommunications service profile.

25. The apparatus of Claim 24, wherein said personal profile form is analyzed by a provisioning system which implements the changed at least one calling feature of the telecommunications service profile.

26. The apparatus of Claim 25, wherein said apparatus and said provisioning system communicate through an Internet.

27. The apparatus of Claim 25, wherein said apparatus and said provisioning system communicate through a telecommunications network.

28. The apparatus of Claim 24, wherein said personal profile form can enable the subscriber to add at least one calling feature to the telecommunications service profile.

29. The provisioning system of Claim 24, wherein said personal profile form can enable the subscriber to disable at least one calling feature in the telecommunications service profile.

30. The provisioning system of Claim 24, wherein said personal profile form can enable the subscriber to update at least one calling feature in the telecommunications service profile.

31. The apparatus of Claim 24, wherein said personal profile form can be in any desired language.

32. The apparatus of Claim 24, wherein said personal profile form is stored at a provisioning system.

33. The apparatus of Claim 24, wherein said personal profile form is stored at said apparatus.

34. The apparatus of Claim 24, wherein said apparatus is a personal digital assistant, a personal computer or an intelligent phone.

35. The apparatus of Claim 24, wherein said at least one calling feature can be any network provided service.
